# EUROPÄISCHE PATENTSCHRIFT

(11) **EP 0 654 788 B1**
(45) Veröffentlichungstag und Bekanntmachung des Hinweises auf die Patenterteilung: **07.07.1999**
(21) Anmeldenummer: 94114995.7
(22) Anmeldetag: 23.09.1994
(51) Int. Cl.: G11B 23/023

(54) **Behälter für Magnetbandkassetten**
Container for a magnetic tape cassette
Boîte pour cassette à bande magnétique

(30) Priorität: 19.11.1993 DE 9317730 U
(43) Veröffentlichungstag der Anmeldung: 24.05.1995
(73) Patentinhaber: fischerwerke Artur Fischer GmbH & Co. KG, D-72178 Waldachtal (DE)
(72) Erfinder: Ziegler, Christiane, Dipl.-Ing,(FH), D-72178 Waldachtal (DE)

(56) Entgegenhaltungen:
- EP-A- 0 321 937
- EP-A- 0 323 437
- EP-A- 0 383 007
- EP-A- 0 490 049
- WO-A-86/01930
- WO-A-87/00957
- GB-A- 2 205 554

## Beschreibung

Die Erfindung betrifft einen Behälter für Magnetbandkassetten gemäß Oberbegriff des Anspruchs 1.

Aus der GB-A 2 205 554 sind Behälter für die Aufbewahrung von Magnetbandkassetten bekannt, die jeweils einen in ein Gehäuse einschiebbaren Schieber aufweisen, auf den eine aufzubewahrende Magnetbandkassette abgelegt werden kann. Die Behälter können über Verbindungselemente zu einem mehrere Behälter umfassenden Block zusammengesteckt werden. Es besteht auch die Möglichkeit, mehrere Behälter übereinander oder nebeneinander in eine gemeinsame Halterung einzusetzen, die in einem Kraftfahrzeug in eine entsprechende Aussparung am Armaturenbrett oder an einer Konsole eingebaut werden kann. Eine Halterung mit mehreren übereinander angeordneten Schiebern ist aus der DE 40 39 954 A1 bekannt.

Da diese Behälter insbesondere für die Aufbewahrung von Magnetbandkassetten in Kraftfahrzeugen verwendet werden, ist es besonders wichtig, daß die Handhabung beim Entnehmen und Wiedereinsetzen einer Magnetbandkassette möglichst einfach ist. Zu diesem Zweck kann in der Entnahmeposition, wo die Magnetbandkassette geringfügig aus dem Gehäuse herausragt, das vordere Teil des unter der Magnetbandkassette befindlichen Schiebers nach unten verschwenken, um einen optimalen Zugriff zur Magnetbandkassette zu ermöglichen.

Dazu besteht in der Grundplatte des Schiebers des bekannten Behälters ein Abstand zwischen dem nicht verschwenkbaren und dem verschwenkbaren Teil des Schiebers, so daß man eine quer in der Grundplatte verlaufende Lücke im Bereich der Schwenkachse erhält, wodurch es möglich ist, den verschwenkbaren Teil des Schiebers in der Entnahmeposition weit nach unten zu verschwenken, um einen großen Freiraum um die aus dem Gehäuse herausragende Magnetbandkassette zu schaffen. Die Magnetbandkassette läßt sich somit besonders leicht und an beliebiger Stelle greifen und aus dem Behälter entnehmen.

Zum Verschwenken des verschwenkbaren Teils des Schiebers steht an dessen beiden Seiten jeweils eine Zapfen nach außen ab, der jeweils in eine zugehörige Steuerkurve am Gehäuse eingreift. Beim Herausschieben des Schiebers aus dem Gehäuse wird der Zapfen in der Steuerkurve bis zu einem Anschlag geführt, so daß der im Abstand von der Schwenkachse des Schiebers gebrachte Zapfen von diesem Anschlag gehalten und der verschwenkbare Teil des Schiebers dadurch mit der Kraft einer Druckfeder nach unten geschwenkt wird. Die Druckfeder kann im rückwärtigen Teil des Gehäuses angeordnet sein und drückt den Schieber mit ihrer Federkraft in die Entnahmeposition. Zum Verschwenken des verschwenkbaren Teils ist somit keine separate Feder erforderlich, sondern es wird die Federkraft der zur Betätigung des Schiebers vorgesehenen Druckfeder ausgenutzt.

Da die Behälter insbeondere in Kraftfahrzeugen eingesetzt werden, kann bei in der Entnahmeposition befindlichem Schieber unbeabsichtigt von oben gegen den aus dem Gehäuse ragenden Teil des Schiebers gestoßen werden, so daß dieser abbricht.

Der Erfindung liegt die Aufgabe zugrunde, einen Behälter für Magnetbandkassetten zu schaffen, der gegen eine Beschädigung geschützt ist.

Die Lösung dieser Aufgabe erhält man durch die im Anspruch 1 angegebenen Merkmale.

Der verschwenkbare Teil des Schiebers des erfindungsgemäßen Behälters verschwenkt zwangsgesteuert in die Entnahmeposition nach unten. Erfindungsgemäß ist eine Überdrücksicherung vorgesehen, die bei einem unbeabsichtigten Überdrücken des verschwenkbaren Schieberteils ein Abbrechen der Zapfen vermeidet. Zu diesem Zweck besitzen die Zapfen Anlaufflächen, die beim Überdrücken des vorderen Schieberteils die Zapfen nach innen in das Gehäuse zurückweichen lassen, so daß die Zapfen nicht mehr am Anschlag der Steuerkurve anliegen. Ein Abbrechen der Zapfen wird dadurch auch bei unsachgemäßer Handhabung sicher vermieden.

Weiterhin ist zur Verbesserung der Handhabung ein im Gehäuse angeordneter Lichtleiter vorgesehen, der bis zu einem im verschwenkbaren Teil des Schiebers angeordneten Lichtleiter führt. Bei geöffnetem Behälter strahlt die Stirnfläche des im Gehäuse befindlichen Lichtleiters frei nach vorne ab, wodurch die Einschuböffnung auch bei Dunkelheit deutlich erkennbar wird.

Der im verschwenkbaren Teil des Schiebers angeordnete Lichtleiter führt zu einer Leeranzeige, die um eine vertikale Achse drehbar ist und an der sichtbaren Seite vom Lichtleiter angestrahlt wird. Zur Betätigung der Leeranzeige besitzt diese eine Betätigungswendel, die in den Aufnahmeraum des Schiebers absteht und von einer auf dem Schieber aufliegenden Magnetbandkassette um etwa 45° gegen die Kraft einer Rückstellfeder gedreht wird. Eine auf der Leeranzeige angebrachte Markierung, die gegebenenfalls den Leerzustand signalisiert, ist durch die von außen erfolgende Beleuchtung besonders gut bei Dunkelheit sichtbar, wodurch ebenfalls eine weitere Optimierung der Handhabung erreicht wird.

Arretierelemente für die Bandnaben sind ebenfalls im Gehäuse des Behälters angeordnet, um störende Klappergeräusche und ein unbeabsichtigtes Verdrehen der Spulen einer eingelegten Magnetbandkassette zu vermeiden.

Der Erfindungsgegenstand ist sowohl für den Quereinschub als auch für den Längseinschub von Magnetbandkassetten oder dergleichen Aufzeichnungsträger geeignet. Der weit nach unten verschwenkbare vordere Teil des Schiebers bietet jedoch insbesondere bei einer für den Quereinschub ausgebildeten Ausführung große Vorteile, da hier der Schieber eine deutlich geringere Einbautiefe hat als bei einer Ausführung für den Längseinschub. Die geringere Einbautiefe hat dann zwangsläufig zur Folge, daß der verschwenkbare Teil des Schiebers eine geringe Einbautiefe hat, so daß dieser Teil des Schiebers möglichst weit nach unten verschwenkbar sein sollte, um ein möglichst problemloses Ergreifen der quer angeordneten Magnetbandkassette zu ermöglichen.

Die Erfindung wird nachfolgend anhand eines in der Zeichnung dargestellten Ausführungsbeispiels näher erläutert.

Es zeigen:
Figur 1 einen Behälter, bei dem sich der Schieber in der aufgeklappten Entnahmeposition befindet,
Figur 2 den Behälter von Figur 1, bei dem sich der Schieber in der Aufbewahrungsposition befindet,
Figur 3 den Schieber des Behälters von Figur 1 und
Figur 4 die Anordnung der Arretierelemente für die Bandnaben am Gehäuse des Behälters von Figur 1.

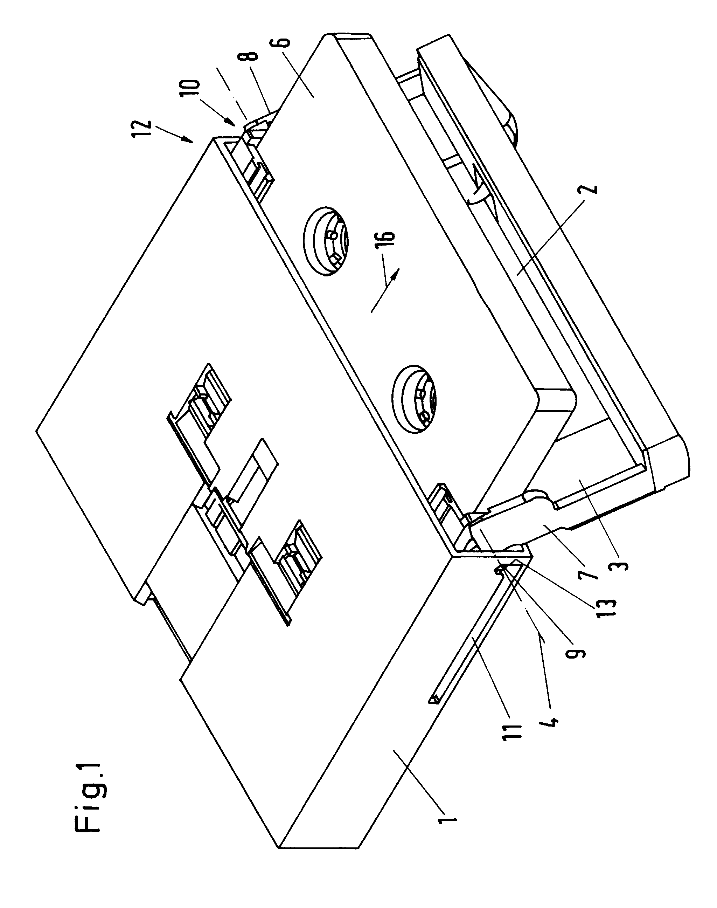

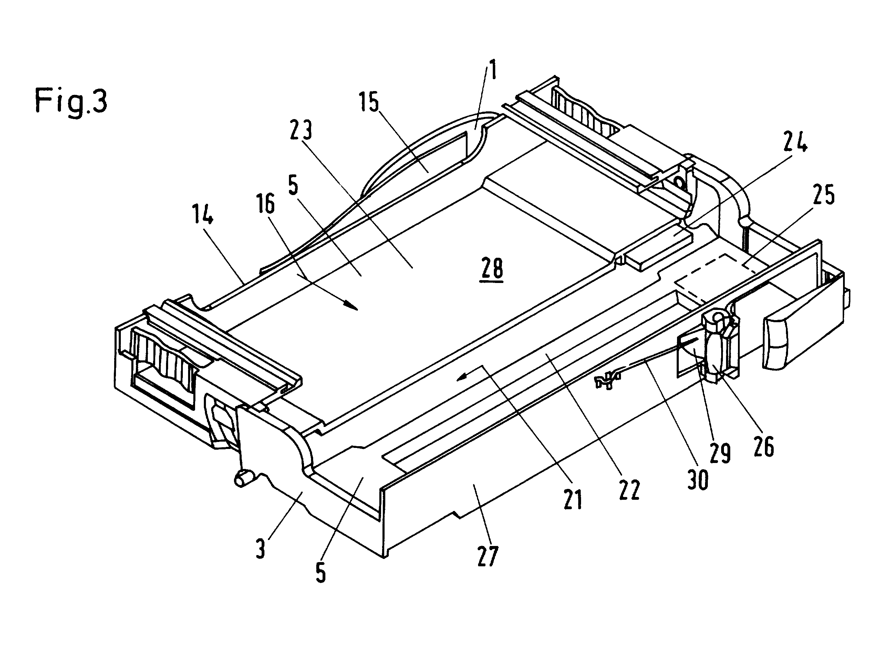

Der in Figur 1 dargestellte Behälter besteht aus einem Gehäuse 1 und einem Schieber 2, von dem hier insbesondere der vordere, verschwenkbare Teil 3 des Schiebers sichtbar ist. Der verschwenkbare Teil 3 ist um seine Schwenkachse 4 in eine Entnahmeposition nach unten verschwenkt. Eine auf der Grundplatte 5 (Figur 3) des Schiebers 2 aufliegende Magnetbandkassette 6 läßt sich in dieser Entnahmeposition bequem von Hand aus dem Gehäuse 1 entnehmen.

Im Abstand von der Schwenkachse 4 befindet sich an beiden Seiten 7, 8 des Teils 3 jeweils ein nach außen abstehender Zapfen 9, 10, die in seitlich am Gehäuse 1 ausgebildete Steuerkurven 11, 12 eingreifen. Da der Zapfen 10 und die Steuerkurve 12 nicht sichtbar sind, sind deren Positionen mit Positionspfeilen angedeutet.

In der Entnahmeposition liegt der Zapfen 9 an einem Anschlag 13 der Steuerkurve 11 an, wobei eine an der Rückseite 14 (Figur 3) des Schiebers 2 angreifende Druckfeder 15 den Schieber 2 in Pfeilrichtung 16 nach vorne drückt.

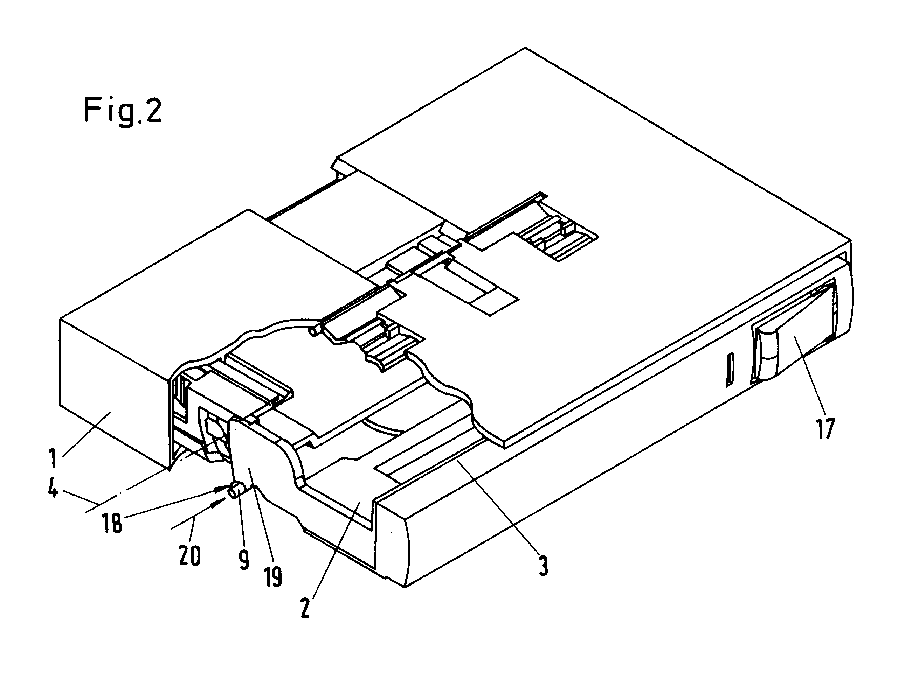

In Figur 2 befindet sich der Schieber 2 in der Aufbewahrungsposition, in der er vollständig in das Gehäuse 1 eingeschoben und eingerastet ist. Durch Betätigung einer Taste 17 läßt sich der Schieber 2 entriegeln, so daß er mit der Druckfeder 15 in die Entnahmeposition gemäß Figur 1 gedrückt werden kann.

Der Zapfen 9 besitzt eine Anlauffläche 18 und ist auf einem dünnwandigen seitlichen Trägerelement 19 unterhalb der Schwenkachse 4 angeordnet. Die Anlauffläche 18 stellt in Verbindung mit dem in Pfeilrichtung 20 elastisch eindrückbaren Trägerelement 19 eine Überdrücksicherung für das verschwenkbare Teil 3 dar. Wird nämlich in der Entnahmeposition der verschwenkbare Teil 3 (Figur 1) unbeabsichtigt von Hand weiter nach unten gedrückt, so bewirkt die Anlauffläche 18, daß der Zapfen 9 in Pfeilrichtung 20 nach innen zurückweicht, bis er nicht mehr in die Steuerkurve 11 eingreift und auch nicht mehr am Anschlag 13 anliegt.

In Figur 3 ist eine in der Grundplatte 5 ausgebildete Lücke 21 ersichtlich, die die Grundplatte 5 in einen vorderen Teil 22 und einen rückwärtigen Teil 23 unterteilt. Ein am Gehäuse angeordneter Lichtleiter 24 ragt in die Lücke 21 und stellt die Lichtleitung zu einem im verschwenkbaren Teil 3 angeordneten Lichtleiter 25 her. Über den Lichtleiter 25 gelangt das Licht zu einer Leeranzeige 26, die um eine vertikale Achse drehbar an der Frontblende 27 angeordnet ist. An der Leeranzeige 26 steht in den Aufnahmeraum 28 eine Betätigungswendel 29 ab, die beim Einlegen einer Magnetbandkassette gegen die Federkraft einer Rückstellfeder 30 um etwa 45° gedreht wird. Durch die Drehung ändert sich die Position einer auf der Leeranzeige 26 angebrachten Markierung, die anzeigt, ob auf dem Schieber eine Magnetbandkassette aufliegt.

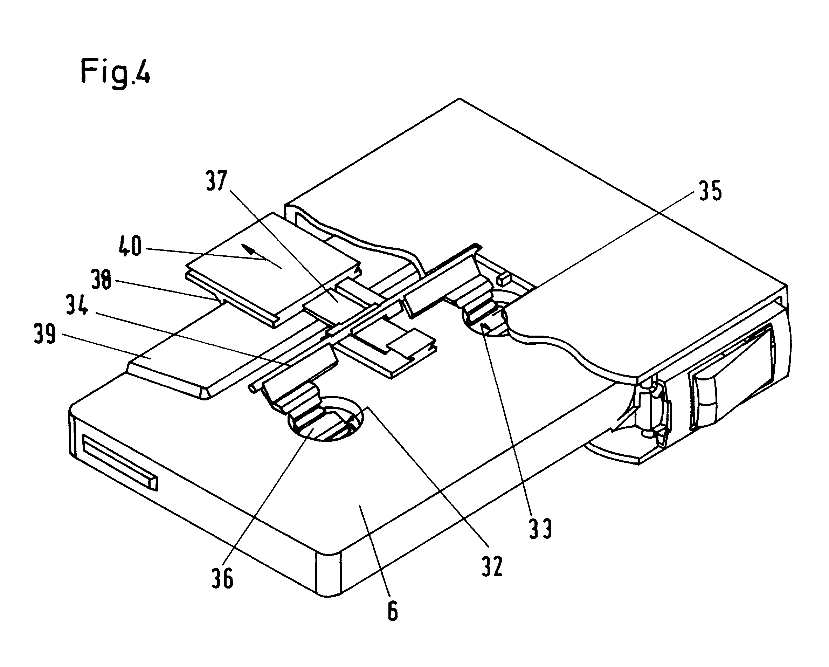

In Figur 4 ist insbesondere eine Arrtiereinrichtung für die Bandnaben 32, 33 dargestellt, die zwei an einer Querachse 34 angeordnete Arretierelemente 35, 36 besitzt. Die Querachse 34 wird über einen Schiebemechanismus 37 betätigt, der mit einem Mitnehmer 38 an einem Wulst 39 einer eingeschobenen Magnetbandkassette 6 angreift. Durch eine Längsverschiebung des Schiebemechanismus 37 in Pfeilrichtung 40 wird bei Erreichen der Aufbewahrungsposition die Querachse 34 mit den Arretierelementen 35, 36 verschwenkt, daß diese in die Spulennaben 32, 33 eingreifen.

Die bevorzugte Ausführungsform ist in der Zeichnung dargestellt, wobei jedoch anstelle einer quer eingeschobenen Magnetbandkassette auch eine Ausführung mit längs eingeschobener Magnetbandkassette die erfindungsgemäßen Merkmale aufweisen kann.

## Patentansprüche

1. Behälter für Magnetbandkassetten mit einem Gehäuse (1) und einem eine Magnetbandkassette (6) aufnehmenden Schieber (2), der in dem Gehäuse (1) in einer Aufbewahrungsposition verriegelbar ist und mittels eines Federelements (15) teilweise aus dem Gehäuse (1) in eine Entnahmeposition verschiebbar ist, wobei in der Entnahmeposition das aus dem Gehäuse (1) ragende Teil (3) des Schiebers (2) bei waagerecht ausgerichtetem Gehäuse (1) um eine horizontale Schwenkachse (4) nach unten verschwenkbar ist, wobei in der Aufbewahrungposition in der Grundplatte (5) des Schiebers (2) zwischen dem verschwenkbaren Teil (3) und der nicht verschwekbaren, rückwärtigen Grundplatte (23) eine Lücke (21) besteht und die Schwenkachse (4) oberhalb und mit Abstand zur Grundplatte (5) angeordnet ist, und wobei unterhalb der Schwenkachse (4) an dem verschwenkbaren Teil (3) des Schiebers (2) wenigstens einseitig ein Zapfen (9) nach außen absteht, der an einer seitlich am Gehäuse (1) ausgebildeten Steuerkurve (11) eingreift, die in der Entnahmeposition an dem Zapfen (9) den verschwenkbaren Teil (3) nach unten drückt, **dadurch gekennzeichnet**, daß der Zapfen (9) als Überdrücksicherung eine Anlauffläche (18) hat und an einem seitlich am Schieber (2) befindlichen und nach innen elastisch eindrückbaren Trägerelement (19) angebracht ist.

2. Behälter nach Anspruch 1, **dadurch gekennzeichnet**, daß in der Aufbewahrungsposition die Lücke (21) in der Grundplatte (5) von einem im Gehäuse (1) einliegenden ersten Lichtleiter (24) überbrückt wird, der bis zu einem in dem verschwenkbaren Teil (3) einliegenden zweiten Lichtleiter (25) ragt, der zu einer an der Frontblende (27) befindlichen Leeranzeige (26) führt.

3. Behälter nach Anspruch 2, **dadurch gekennzeichnet**, daß die Leeranzeige (26) ein um eine vertikale Achse drehbares Anzeigenelement mit einer Markierung ist, an dem eine Betätigungswendel (29) absteht und daß eine Rückstellfeder (30) in die Leerposition drückt, in der die Betätigungswendel (29) in den Aufnahmeraum (28) des Schiebers (2) ragt.

4. Behälter nach einem der vorhergehenden Ansprüche, **dadurch gekennzeichnet**, daß am Gehäuse (1) in die Bandnaben (32, 33) einer Magnetbandkassette (6) verschwenkbare Arretierelemente (35, 36) an einer Querachse (34) angebracht sind, die ein an einem Wulst (39) der eingeschobenen Magnetbandkassette (6) angreifender Mitnehmer (38) betätigt.

## Claims

1. A container for magnetic tape cassettes having a housing (1) and a slider (2) accommodating a magnetic tape cassette (6), which slider is arranged to be locked in the housing (1) in a storage position and is arranged to be displaced by means of a spring element (15) partially out of the housing (1) into a removal position, wherein the part (3) of the slider (2) projecting from the housing (1) in the removal position is pivotable downwards about a horizontal pivot axis (4) when the housing (1) is horizontally oriented, wherein, in the storage position, there is a gap (21) in the base plate (5) of the slider (2) between the pivotable part (3) and the non-pivotable rear base plate (23), and the pivot axis (4) is arranged above and spaced from the base plate (5), and wherein beneath the pivot axis (4) a peg (9) projects outwards from the pivotable part (3) of the slider (2) at least on one side, which peg engages with a guide cam (11) which is formed laterally on the housing (1) and which in the removal position presses the pivotable part (3) downwards at the peg (9), characterized in that the peg (9) has a ramp face (18) as a means safeguarding against too great a pressure, and is mounted on a carrier element (19) which is located laterally on the slider (2) and is arranged to be pressed resiliently inwards.

2. A container according to claim 1, characterized in that, in the storage position, the gap (21) in the base plate (5) is bridged by a first light guide (24) lying in the housing (1), the light guide reaching as far as a second light guide (25) which lies in the pivotable part (3) and leads to an "empty" indicator (26) located at the front panel (27).

3. A container according to claim 2, characterized in that the "empty" indicator (26) is an indicating element rotatable about a vertical axis and having a marking and from which a turning piece (29) projects, which element is pressed by a restoring spring (30) into the empty position in which the turning piece (29) projects into the receiving space (28) of the slider (2).

4. A container according to one of the preceding claims, characterized in that on the housing (1) locking elements (35, 36) pivotable into the tape hubs (32, 33) of a magnetic tape cassette (6) are arranged on a transverse axle (34) which is operated by a driver element (38) engaging with an enlargement (39) on the inserted magnetic tape cassette (6).

## Revendications

1. Boîte pour cassettes à bande magnétique comportant un boîtier (1) et un tiroir (2) qui reçoit une cassette à bande magnétique (6), peut se verrouiller dans le boîtier (1) dans une position de rangement et peut, au moyen d'un élément élastique (15), coulisser partiellement hors du boîtier (1) dans une position de saisie, dans le cas de laquelle, dans la position de saisie, la partie (3) du tiroir (2) qui sort hors du boîtier (1) peut, le boîtier (1) étant disposé horizontalement, pivoter vers le bas autour d'un axe de pivotement horizontal (4), dans le cas de laquelle, dans la position de rangement, il y a un vide (21) dans la plaque de base (5) du tiroir (2), entre la partie pivotante (3) et la plaque de base arrière, non pivotante, (23), et l'axe de pivotement (4) est disposé au-dessus et à une certaine distance de la plaque de base (5), et dans le cas de laquelle, en-dessous de l'axe de pivotement (4), sur la partie pivotante (3) du tiroir (2) saille vers l'extérieur, au moins d'un côté, un téton (9) qui vient en prise dans une came de commande (11) qui est prévue latéralement sur le boîtier (1) et qui, dans la position de saisie, pousse la partie pivotante (3) vers le bas par le téton (9), caractérisée par le fait que le téton (9) présente, comme sécurité à la surpression, une surface en chanfrein (18) et qu'il est disposé sur un élément support (19) qui se trouve latéralement sur le tiroir (2) et peut être élastiquement repoussé vers l'intérieur.

2. Boîte selon la revendication 1, caractérisée par le fait que dans la position de rangement, le vide (21) existant dans la plaque de base (5) est franchi par un premier guide de la lumière (24) qui se trouve dans le boîtier (1) et qui pénètre jusqu'à un second guide de la lumière (25) qui se trouve dans la partie pivotante (3) et conduit à un indicateur de boîte vide (26) qui se trouve sur le panneau avant (27).

3. Boîte selon la revendication 2, caractérisée par le fait que l'indicateur de boîte vide (26) est un élément indicateur avec un repère, pouvant tourner autour d'un axe vertical et sur lequel saille un tourniquet de manoeuvre (29), et qu'un ressort de rappel (30) repousse dans la position de boîte vide dans laquelle le tourniquet de manoeuvre (29) pénètre dans l'espace de réception (28) du tiroir (2').

4. Boîte selon l'une des revendications précédentes, caractérisée par le fait que sur le boîtier (1) des éléments de blocage (35, 36), qui peuvent pivoter dans les moyeux de bande (32, 33) d'une cassette à bande magnétique (6), sont prévus sur un axe transversal (34) qui manoeuvre un entraîneur (38 ) qui vient en prise contre un bourrelet (39) de la cassette à bande magnétique (6) que l'on insère.
